# EUROPEAN PATENT APPLICATION

(11) **EP 4 596 863 A1**
(43) Date of publication of application: **06.08.2025**
(21) Application number: 23869664.5
(22) Date of filing: 24.05.2023
(51) Int. Cl.: F02P 9/00

(54) **HOT SURFACE IGNITER TEMPERATURE CONTROL SYSTEM AND METHOD**

(30) Priority: 30.09.2022 CN 202211205535
(71) Applicant: CHONGQING LE-MARK TECHNOLOGY CO., LTD., Jiulongpo District Chongqing 401329 (CN)
(72) Inventor: LEIGH, Peter, Chongqing 401329 (CN)
(74) Representative: Angerhausen, Christoph
(86) International application number: PCT/CN2023/096026
(87) International publication number: WO 2024/066411

(57) **Abstract**

Disclosed in the present invention is a temperature control system for a hot surface igniter, said system comprising: a power supply module, for supplying power to the control system; and further comprising: a storage module, which pre-stores a set target temperature; a collection module, for collecting and obtaining the current temperature of the hot surface igniter; a determination module, for determining whether the current temperature of the hot surface igniter matches the target temperature; a calculation module, for obtaining the temperature difference value between the target temperature and the current temperature by calculation using the current temperature when the current temperature does not match the target temperature, and obtaining a voltage control quantity according to the temperature difference value; and a control module, for automatically controlling an output voltage of the power supply module according to the obtained voltage control quantity until it is determined that the current temperature of the hot surface igniter matches the target temperature. **The** present invention can enable the hot surface igniter to obtain a suitable voltage to ensure that the hot surface igniter operates at a set target temperature, thereby realizing precise control over the operating temperature of the hot surface igniter, and increasing the service life of the hot surface igniter

## Description

### TECHNICAL FIELD

The present invention relates to a hot surface igniter, and in particular, to a temperature control system and method for a hot surface igniter.

### BACKGROUND

A hot surface igniter, as an automatic ignition device, uses a hot surface ignition technology, which can allow for combustible gas/fuel oil to enter a combustion region after the hot surface igniter reaches a high temperature in advance, thereby completely avoiding possible problems caused by electric sparks. When the hot surface igniter is in operation, a voltage is applied to the hot surface igniter by a power source, and then a heating element of the hot surface igniter operates for ignition. However, on the one hand, since a conventional hot surface igniter uses a constant-voltage power supply method, after a voltage is applied, on the basis of the effects of the material of the heating element itself and the physical structure thereof, the temperature of the hot surface igniter is not adjustable. On the other hand, for most fields, the conventional hot surface igniter only has an ignition function when applied, that is to say, the hot surface igniter is only started in an ignition process and has a very short use period, and thus the service life of the hot surface igniter is generally long. But in some special application fields, for example, in the automobile industry, the hot surface igniter needs to operate all the time, and thus compared with other application fields, the service life of hot surface igniters applied in these special fields will be shorter; furthermore, when in use, the voltage fluctuates, and the working conditions are also complicated, for example, the voltage fluctuates between high and low, and the temperature of the operating environment fluctuates between cold and hot, which causes great impact on the heating element of the hot surface igniter, thereby further reducing the service life of the hot surface igniter.

Chinese patent application no. CN 110594783 B discloses a control strategy for a hot surface igniter, in which on the basis of a hardware circuit of the hot surface igniter and a software algorithm, operating time of the hot surface igniter is divided into time periods t1, t2, ..., tn, and in each time period, an output voltage or output power of the hardware circuit is adjusted by the software algorithm, such that the hot surface igniter reaches an expected temperature. Using the control strategy of the present invention, the ignition time of the hot surface igniter can be easily controlled, thereby satisfying the requirements of customers who need to achieve ignition in a short time. The prior art document has the following disadvantages: in this prior art document, the output voltage is controlled by sampling the output voltage so as to control the temperature, but the temperature is not measured; therefore, during the control process, control on the temperature is not precise enough, and once over-temperature of the hot surface igniter occurs, the problem of short service life still exists.

### SUMMARY

In order to solve the technical problem of short service life of a hot surface igniter caused by not accurate temperature control of the hot surface igniter in the prior art, the present invention provides a temperature control system for a hot surface igniter, comprising: a power supply module, for supplying power to the control system;
said system further comprises: a storage module, which pre-stores a set target temperature;
a collection module, for collecting and obtaining a current temperature of the hot surface igniter;
a determination module, for determining whether the current temperature of the hot surface igniter matches the target temperature;
a calculation module, for obtaining the temperature difference value between the target temperature and the current temperature by calculation using the current temperature when the current temperature does not match the target temperature, and obtaining a voltage control quantity according to the temperature difference value; and
a control module, for automatically controlling an output voltage of the power supply module according to the obtained voltage control quantity until it is determined that the current temperature of the hot surface igniter matches the target temperature.

In this solution, after the current temperature of the hot surface igniter is collected, by cooperation with the determination module, it is determined whether the current temperature meets a set target temperature; if it is determined that the current temperature does not conform to the target temperature, the current temperature is used in calculation by the calculation module, and then an output voltage of the power supply module is adjusted and controlled according to a calculated voltage control quantity, such that the hot surface igniter can obtain a suitable voltage to ensure that the hot surface igniter operates at the set target temperature, thereby realizing precise control over the operating temperature of the hot surface igniter, and increasing the service life of the hot surface igniter.

Preferably, the storage module pre-stores a thermoelectric signal data table represented by an array, wherein the thermoelectric signal data table comprises multiple groups of voltage values and corresponding temperature values; and the collection module collects a thermoelectric signal when a voltage falling-edge signal of the hot surface igniter appears, and obtains the current temperature of the hot surface igniter according to the thermoelectric signal data table. In this solution, the current temperature of the hot surface igniter is collected by collecting the thermoelectric signal, and the operation is simple.

Preferably, the collection module collects an electrical parameter when a voltage rising-edge signal of the hot surface igniter appears; and the determination module further determines, according to the current electrical parameter, whether the current power consumption condition is anomalous; and if it is determined that the current electrical environment is anomalous, the control module is further used for controlling the power supply module to stop power supply. In the present solution, the electrical parameter collected by the collection module is also used for determination of whether a power consumption condition of the hot surface igniter is anomalous, and if anomaly occurs, the power supply module stops power supply, and at this time, the hot surface igniter does not work anymore, thereby avoiding the problem that the service life of the hot surface igniter is reduced or the hot surface igniter is directly damaged due to continuing to work in anomalous situations.

Preferably, the electrical parameter is a voltage parameter and/or a current parameter, and when the voltage parameter and/or the current parameter are/is anomalous, it is determined that the power consumption condition is anomalous. In the present solution, the voltage parameter and/or the current parameter are used as indexes for determining whether the power consumption condition of the hot surface igniter is anomalous, and the operation is simple.

Preferably, when calculating the voltage control quantity, the calculation module firstly obtains the difference between the current temperature and the target temperature, and then respectively multiplies the difference by a proportional coefficient, an integral coefficient and a differential coefficient and then performs summation on the products to finally obtain the voltage control quantity. In the present solution, after the difference between the current temperature and the target temperature is obtained by calculation, calculations of multiplication and summation are performed to obtain the voltage control quantity, so as to control the output voltage, thereby finally achieving precise adjustment of the temperature, and the operation is simple.

Preferably, the power supply module is used for outputting a driving voltage to the hot surface igniter, and the control module controls, according to the voltage control quantity, the duration of the driving voltage outputted by the power supply module. In the present solution, the temperature of the hot surface igniter is controlled by controlling the duration of the outputted driving voltage, and when the temperature needs to be increased, it is only necessary to prolong the duration of the output, and the operation is simple.

Preferably, the power supply module is used for outputting to the hot surface igniter a driving voltage for generating forward and reverse currents; and the control module controls, according to the voltage control quantity, the magnitude of an effective value of the forward-reverse driving voltage outputted by the power supply module. In the present solution, the outputted driving voltage is forward and reverse voltages capable of generating forward and reverse currents; therefore, when the temperature of the hot surface igniter needs to be adjusted, it is only necessary to adjust the magnitude of the effective value of the outputted forward and reverse driving voltages, and the operation is simple.

In a second aspect, the present invention further provides a temperature control method for a hot surface igniter, comprising the following steps:
S1: performing system initialization;
S2: controlling an output voltage;
S3: collecting and obtaining the current temperature of the hot surface igniter;
S4: determining whether the current temperature matches a target temperature, if so, maintaining the current output voltage and executing S2; and if not, skipping to S5;
S5: calculating the current temperature to obtain a voltage control quantity, returning to S2, and adjusting the output voltage according to the obtained voltage control quantity; and
S6: receiving an operation stop signal, and turning off the output voltage.

Preferably, in S2, the output voltage is adjusted and controlled by adjusting the output method by PWM.

Preferably, in S3, a thermoelectric signal is collected when a voltage falling-edge signal of the hot surface igniter appears, and the current temperature of the hot surface igniter is obtained according to a preset thermoelectric signal data table, wherein the preset thermoelectric signal data table comprises multiple groups of voltage values and corresponding temperature values.

Preferably, in S3, when a voltage rising-edge signal of the hot surface igniter appears, an electrical parameter is further collected, and whether a current electrical environment is anomalous is determined according to the electrical parameter; if it is determined that the current electrical environment is anomalous, skip to S6; and if it is determined that the current electrical environment is normal, continue to execute S3.

The present invention has the following beneficial effects:
1. In the control system provided in the present invention, after the thermoelectric signal of the hot surface igniter is collected, the current temperature of the hot surface igniter is collected; then, calculation is performed according to the current temperature, and the calculation result is used in output control of the output voltage, and finally, the output voltage is reasonably adjusted, such that the hot surface igniter obtains a suitable voltage, thereby realizing precise control over the temperature of the hot surface igniter, and prolonging the service life of the hot surface igniter.
2. In the present invention, PWM pulse square-wave voltage power supply is used, the thermoelectric signal is collected when a falling-edge signal occurs, to achieve temperature measurement; and the electrical parameter is collected when a rising-edge signal occurs, to achieve the determination of the electrical environment; that is, using a PWM pulse square-wave voltage power supply mode can satisfy both the requirements of temperature measurement and determination of electrical environment.
3. In the present invention, the voltage control quantity for controlling the output voltage is obtained by calculation on the basis of calculations of multiplication and summation based on the difference between the current temperature and the target temperature, such that precise control of the temperature of the hot surface igniter can be achieved, and the problem of damage to the hot surface igniter or decrease in service life due to over-temperature of the hot surface igniter can also be avoided.

### BRIEF DESCRIPTION OF THE DRAWINGS

FIG. 1 is a block diagram of modules of a temperature control system for a hot surface igniter and a temperature control system in Method Embodiment 1 of the present invention; and
FIG. 2 is a flowchart of a temperature control method in Embodiment 1.

### DETAILED DESCRIPTION OF THE EMBODIMENTS

Hereinafter, detailed illustration will be further made by specific embodiments:

### Embodiment 1

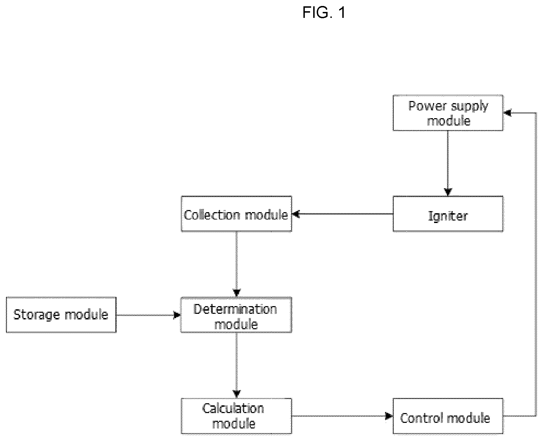

This embodiment is basically as shown in FIG. 1:
A temperature control system for a hot surface igniter, comprising: a power supply module, for supplying power to the control system;
further comprising: a storage module, which pre-stores a set target temperature and a thermoelectric signal data table which is represented by an array, wherein the thermoelectric signal data table comprises multiple groups of voltage values and corresponding temperature values;
a collection module, for collecting and obtaining the current temperature of the hot surface igniter, wherein specifically, the collection module collects a thermoelectric signal when a voltage falling-edge signal of the hot surface igniter appears, and obtains the current temperature of the hot surface igniter according to the thermoelectric signal data table; and the collection module also collects an electrical parameter when a voltage rising-edge signal of the hot surface igniter appears, and in the present embodiment, the electrical parameter is a voltage parameter and/or a current parameter;
a determination module, for determining whether the current temperature of the hot surface igniter matches the target temperature, and also for determining, according to the current electrical parameter, whether the current power consumption condition is anomalous; wherein specifically when the voltage parameter and/or the current parameter are/is anomalous, it is determined that the power consumption condition is anomalous;
a calculation module, for obtaining the temperature difference value between the target temperature and the current temperature by calculation using the current temperature when the current temperature does not match the target temperature, and for obtaining a voltage control quantity according to the temperature difference value; wherein in the present embodiment, when calculating the voltage control quantity, the calculation module firstly obtains the difference between the current temperature and the target temperature, and then respectively multiplies the difference by a proportional coefficient, an integral coefficient and a differential coefficient and then performs summation on the products to finally obtain the voltage control quantity; and
a control module, for automatically controlling an output voltage of the power supply module according to the obtained voltage control quantity until it is determined that the current temperature of the hot surface igniter matches the target temperature, and also for controlling, if it is determined that the current electrical environment is anomalous, the power supply module to stop power supply.

The thermoelectric signal data table is a data table for temperature conversion. A voltage value Vt of the thermoelectric signal is obtained by an ADC (a mode converter), in which the voltage value has an intrinsic correlation with the temperature of the hot surface igniter, that is, when a certain voltage value Vt corresponds to a certain temperature value T, for example, when T = 800°C, the corresponding voltage value Vt = 0.373 V. Taking the temperature as indexes of an array and Vt as element values of the array, a thermoelectric signal data table represented by an array is formed.

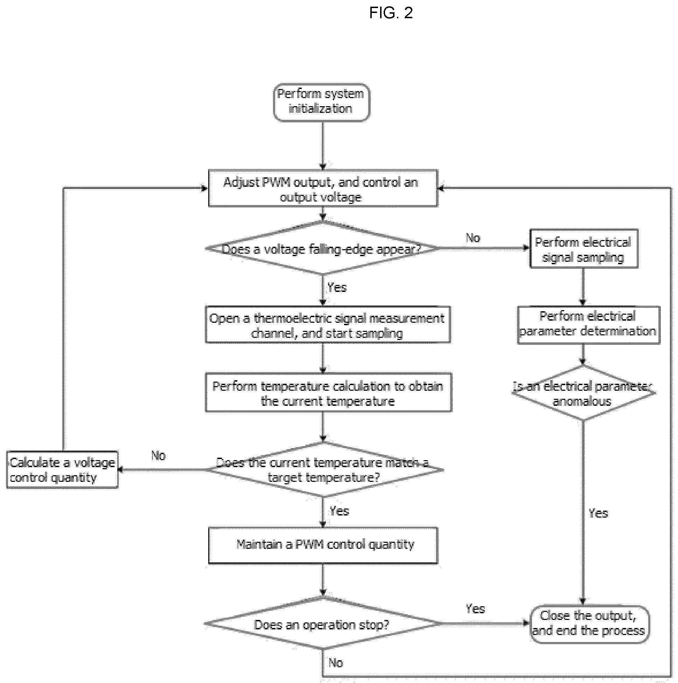

In the process above, the power supply module may adopt a PWM square-wave power supply mode, a direct-current power supply mode, and a sine wave alternating-current power supply mode. Taking a PWM pulse square-wave voltage as an example, as shown in figure 2, on the basis of the described temperature control system, the present embodiment further discloses a temperature control method for a hot surface igniter, comprising the following steps:
S1: performing system initialization;
S2: adjusting PWM output, and controlling an output voltage;
S3: when a voltage falling-edge signal of the hot surface igniter appears, i.e. in a PWM Toff period, opening a thermoelectric signal channel and collecting a thermoelectric signal; after collecting the thermoelectric signal, immediately closing the thermoelectric signal channel, and filtering the collected thermoelectric signal to obtain an effective thermoelectric signal; and then obtaining the current temperature of the hot surface igniter according to a preset thermoelectric signal data table; when a voltage rising-edge signal of the hot surface igniter appears, i.e. in a PWM Ton period, collecting an electrical parameter, and determining whether a current electrical environment is anomalous according to the electrical parameter; if it is determined that the current electrical environment is anomalous, skipping to S6; and if it is determined that the current electrical environment is normal, continuing to execute S3; and when determining whether the current electrical environment is anomalous, taking a voltage being the electrical parameter as an example, if it is determined that the current voltage parameter is greater than a rated voltage parameter of the hot surface igniter, determining that the current electrical environment is anomalous;
S4: determining whether the current temperature matches a target temperature, if so, maintaining the current output voltage and executing S2; and if not, skipping to S5;
S5: calculating the current temperature to obtain a voltage control quantity, returning to S2, and adjusting the output voltage according to the obtained voltage control quantity; and when the adjustment is performed, adjusting the ratio of the Ton period to the Toff period in a PWM pulse square-wave voltage according to the voltage control quantity, such that the hot surface igniter obtains a suitable voltage, to ensure that the hot surface igniter operates at the set target temperature; and
S6: receiving an operation stop signal, and turning off the output voltage.

### Embodiment 2

This embodiment differs from Embodiment 1 in that: in this embodiment, the power supply module supplies power in a constant-temperature direct-current power supply mode. In this power supply mode, the temperature of the hot surface igniter is adjusted by adjusting the power supply duration. Specifically, after the power supply module gives a voltage to the hot surface igniter for a period of time, the power supply module stops power supply; the collection module instantaneously collects and obtains the current temperature of the hot surface igniter; then the determination module determines whether the current temperature of the hot surface igniter matches a target temperature; and then the power supply duration of the power supply module is controlled according to the obtained voltage control quantity. In this mode, by timed turning off of the voltage supplied to the hot surface igniter for a short period of time, such as turning off for 0.1 ms, temperature measurement and calculation are performed by using this time period of 0.1 ms, and then the power supply module starts to supply power again immediately. In addition, the hot surface igniter has a certain thermal inertia, this short turning-off time does not affect the temperature continuity of the hot surface igniter, and thus, the normal temperature increase of the hot surface igniter can be ensured.

The content as described above merely relates to embodiments of the present invention, and common general knowledge such as well-known specific structures and characteristics in the solution is not redundantly described herein. A person of ordinary skill in the art would have been aware of all common technical knowledge in the technical field to which the present invention belongs before the filing date or the priority date, and would have access to all the prior art in the field, and have the capacity to apply routine experimental means before the date. Under the motivation provided in the present application, a person of ordinary skill in the art would have been able to improve and implement the present solution in combination with the capability thereof. Some typical well-known structures or well-known methods should not be obstacles for a person of ordinary skill in the art to implement the present application. It should be noted that, for a person skilled in the art, various modifications and improvements can also be made without departing from the structure of the present invention, and these modifications and improvements shall also be considered as belonging to the scope of protection of the present invention, and these modifications and improvements all do not affect the effect of implementation of the present invention and the applicability of the patent. The scope of protection of the present application shall be subject to the content of the claims, and the disclosure of specific embodiments and the like in the description can be used to interpret the content of the claims.

## Claims

1. A temperature control system for a hot surface igniter, comprising: a power supply module, for supplying power to the control system;
wherein said system further comprises: a storage module, which pre-stores a set target temperature;
a collection module, for collecting and obtaining the current temperature of the hot surface igniter;
a determination module, for determining whether the current temperature of the hot surface igniter matches the target temperature;
a calculation module, for calculating and obtaining, when the current temperature does not match the target temperature, the temperature difference value between the target temperature and the current temperature, and obtaining a voltage control quantity according to the temperature difference value; and
a control module, for automatically controlling an output voltage of the power supply module according to the obtained voltage control quantity until it is determined that the current temperature of the hot surface igniter matches the target temperature.

2. The temperature control system for a hot surface igniter according to claim 1, wherein the storage module pre-stores a thermoelectric signal data table represented by an array, wherein the thermoelectric signal data table comprises multiple groups of voltage values and corresponding temperature values; and
the collection module collects a thermoelectric signal when a voltage falling-edge signal of the hot surface igniter appears, and obtains the current temperature of the hot surface igniter according to the thermoelectric signal data table.

3. The temperature control system for a hot surface igniter according to claim 2, wherein the collection module collects an electrical parameter when a voltage rising-edge signal of the hot surface igniter appears;
and the determination module further determines, according to the current electrical parameter, whether the current power consumption condition is anomalous; and
if it is determined that the current electrical environment is anomalous, the control module is further used for controlling the power supply module to stop power supply.

4. The temperature control system for a hot surface igniter according to claim 3, wherein the electrical parameter is a voltage parameter and/or a current parameter, and when the voltage parameter and/or the current parameter are/is anomalous, it is determined that the power consumption condition is anomalous.

5. The temperature control system for a hot surface igniter according to any one of claims 1-4, wherein when calculating a voltage control quantity, the calculation module firstly obtains the difference between the current temperature and the target temperature, and then respectively multiplies the difference by a proportional coefficient, an integral coefficient and a differential coefficient and then summates the products to finally obtain the voltage control quantity.

6. The temperature control system for a hot surface igniter according to claim 1, wherein the power supply module is used for outputting a driving voltage to the hot surface igniter, and the control module controls, according to the voltage control quantity, the duration of the driving voltage outputted by the power supply module.

7. The temperature control system for a hot surface igniter according to claim 1, wherein the power supply module is used for outputting to the hot surface igniter a driving voltage for generating forward and reverse currents; and the control module controls, according to the voltage control quantity, the magnitude of an effective value of the forward and reverse driving voltages outputted by the power supply module.

8. A temperature control method for a hot surface igniter, comprising the following steps:
S1: performing system initialization;
S2: controlling an output voltage;
S3: collecting and obtaining the current temperature of the hot surface igniter;
S4: determining whether the current temperature matches a target temperature, if so, maintaining the current output voltage and executing S2; and if not, skipping to S5;
S5: obtaining a voltage control quantity by calculation using the current temperature, returning to S2, and adjusting the output voltage according to the obtained voltage control quantity; and
S6: receiving an operation stop signal, and turning off the output voltage.

9. The temperature control method for a hot surface igniter according to claim 8, wherein in S2, the output voltage is adjusted and controlled by adjusting the output method by PWM.

10. The temperature control method for a hot surface igniter according to claim 9, wherein in S3, a thermoelectric signal is collected when a voltage falling-edge signal of the hot surface igniter appears, and the current temperature of the hot surface igniter is obtained according to a preset thermoelectric signal data table, wherein the preset thermoelectric signal data table comprises multiple groups of voltage values and corresponding temperature values.

11. The temperature control method for a hot surface igniter according to claim 10, wherein in S3, when a voltage rising-edge signal of the hot surface igniter appears, an electrical parameter is further collected, and whether the current electrical environment is anomalous is determined according to the electrical parameter;
if it is determined that the current electrical environment is anomalous, skip to S6; and
if it is determined that the current electrical environment is normal, continue to execute S3.
